# EUROPÄISCHE PATENTANMELDUNG

(11) **EP 4 797 027 A1**
(43) Veröffentlichungstag der Anmeldung: **26.08.2026**
(21) Anmeldenummer: 26155612.0
(22) Anmeldetag: 02.02.2026
(51) Int. Cl.: G05D 1/242, G05D 1/244, G05D 1/622, G05D 1/646

(54) **SYSTEM ZUR ANPASSUNG EINES ÜBERWACHUNGSBEREICHS EINER MOBILEN MASCHINE**

(30) Priorität: 20.02.2025 DE 102025106392
(71) Anmelder: SICK AG, 79183 Waldkirch (DE)
(72) Erfinder: Haberer, Manfred, 79359 Riegel (DE); Vinokurov, Artem, 78136 Schonach im Schwarzwald (DE)
(74) Vertreter: Manitz Finsterwald Patent- und Rechtsanwaltspartnerschaft mbB

(57) **Zusammenfassung**

Die Erfindung betrifft ein System zur Überwachung eines Überwachungsbereichs einer mobilen Maschine, umfassend: zumindest eine mobile Maschine mit zumindest einem Kennzeichnungssensor zur Erfassung einer Kennzeichnungsinformation; zumindest eine maschinenlesbare Kennzeichnung, welche entlang einem Fahrweg der Maschine angeordnet ist; zumindest einen Umgebungssensor zur Erfassung der Umgebung der Maschine; und eine Steuereinheit, welche mittels einer Datenverbindung mit dem Umgebungssensor und der Maschine verbunden ist und welche ausgebildet ist, die Maschine zu navigieren und basierend auf der Kennzeichnungsinformation den Überwachungsbereich adaptiv einzustellen

## Beschreibung

Die Erfindung betrifft ein System und Verfahren zur Überwachung eines Überwachungsbereichs einer mobilen Maschine.

Autonome Transportfahrzeuge wie Automated Guided Vehicles (AGVs), Autonomous Mobile Robots (AMRs) und Overhead Transportern (OHTs) finden zunehmend Anwendung in der Logistik, der industriellen Fertigung und anderen Bereichen, in denen autonome Navigation erforderlich ist.

Zur Erkennung potenzieller Kollisionen setzen herkömmliche Systeme auf die Verwendung von Sensoren wie LIDAR-Sensoren oder kamerabasierte Sensoren. Während der Planungs- und Engineeringphase werden dabei spezifische Überwachungsbereiche, auch als Schutz- oder Kollisionsfelder bezeichnet, für ein jeweili-ges Fahrzeug konfiguriert. Diese Felder sind auf verschiedene Fahrsituationen zugeschnitten, beispielsweise für unterschiedliche Geschwindigkeiten oder Kurvenfahrten. Ein typisches System umfasst bis zu 128 solcher Felder, die situationsabhängig aktiviert werden.

Ein wesentliches Problem dieses Lösungsansatzes besteht in der begrenzten Anzahl der konfigurierbaren Überwachungsbereiche, was die Flexibilität und Präzision der Kollisionsvermeidung stark einschränkt. Diese Limitierung führt häufig dazu, dass Überwachungsbereiche entweder zu groß oder zu klein sind. Dies kann wiederum Fehlschaltungen oder das Nichterkennen von Kollisionen zur Folge haben. Darüber hinaus erweist sich die Projektierung und Inbetriebnahme solcher Systeme als äußerst zeitaufwändig und ressourcenintensiv, was die Skalierbarkeit und den Einsatz in dynamischen Umgebungen erschwert.

Es ist daher eine Aufgabe der Erfindung ein System und Verfahren zur Überwachung eines Überwachungsbereichs einer mobilen Maschine bereitzustellen, welche die vorstehenden Probleme adressieren.

Diese Aufgabe wird durch die Gegenstände der unabhängigen Ansprüche gelöst.

Die Erfindung betrifft ein System zur Überwachung eines Überwachungsbereichs einer mobilen Maschine, umfassend:
zumindest eine mobile Maschine mit zumindest einem Kennzeichnungssensor zur Erfassung einer Kennzeichnungsinformation;
zumindest eine maschinenlesbare Kennzeichnung, welche entlang einem Fahrweg der Maschine angeordnet ist;
zumindest einen Umgebungssensor zur Erfassung der Umgebung der Maschine; und
eine Steuereinheit, welche mittels einer Datenverbindung mit dem Umgebungssensor und der Maschine verbunden ist und welche ausgebildet ist, die Maschine zu navigieren und
basierend auf der Kennzeichnungsinformation den Überwachungsbereich adaptiv (und insbesondere automatisch) einzustellen.

Der Überwachungsbereich ist beispielsweise ein Bereich, in dem es unter Berücksichtigung des Fahrwegs der Maschine potenziell zu einer Kollision zwischen der Maschine und einem Objekt kommen könnte. Die Grundidee der Erfindung liegt darin, dass der Überwachungsbereich der Maschine nicht als ein vordefinierter Bereich mit festem Bezug zur Pose, d.h. zur Position und/oder Ausrichtung, der Maschine eingestellt wird, sondern dass der Überwachungsbereich adaptiv basierend auf den erfassten Kennzeichnungsinformationen, insbesondere angepasst an den Fahrweg der Maschine, eingestellt werden kann. Die Kennzeichnungsinformationen stellen dabei bevorzugt zusätzliche Informationen bereit, welche für eine Bestimmung des Überwachungsbereichs von Relevanz sind. Beispielsweise kann basierend auf den Kennzeichnungsinformationen eine präzisere Bestimmung des zu überwachenden Bereichs erfolgen und insbesondere Bereiche, in denen die Gefahr einer Kollision ausgeschlossen ist, unberücksichtigt bleiben. Der Überwachungsbereich kann somit individuell an eine vorliegende Situation oder Umgebung angepasst werden.

Der Überwachungsbereich kann ein durch eine 2D- oder 3D-Geometrie konfigurierter oder definierter Teilbereich des Erfassungsbereichs des Umgebungssensors sein. Der Umgebungssensor kann Objekteingriffe in den Überwachungsbereich erkennen und ist insbesondere dafür ausgebildet, in diesem Fall ein sicherheitsgerichtetes Ausgangssignal auszugeben, welches die Steuereinheit beispielsweise dazu veranlasst, die Maschine zu stoppen, ein Ausweichmanöver zu initiieren, ein akustisches und/oder optisches Warnsignal auszugeben und/oder dergleichen. Allgemein kann bei einem Objekteingriff auch ein nicht-sicherheitsgerichtetes Ausgangssignal ausgegeben werden, welches z.B. zu einer Geschwindigkeitsreduktion der Maschine führen kann. Handelt es sich bei dem erfassten Objekt um eine andere mobile Maschine, so kann die Steuereinheit ferner ausgebildet sein, ein entsprechendes Steuersignal auszugeben, um eine Aktion der anderen Maschine einzuleiten, z.B. um die andere Maschine dazu zu veranlassen, den Überwachungsbereich der Maschine zu verlassen.

Der Umgebungssensor umfasst insbesondere einen LIDAR-Sensor, eine Kamera, eine 3D-Kamera und/oder andere geeignete Sensoren. Der Umgebungssensor ist vorzugsweise als ein Teil der mobilen Maschine ausgebildet und an der Maschine befestigt. Der Umgebungssensor und der Kennzeichnungssensor können insbesondere als ein einziger Sensor ausgebildet sein, welcher die zugehörigen Funktionen vereint. Grundsätzlich muss der Umgebungssensor aber nicht mit der Maschine physisch verbunden sein. Beispielsweise kann der Umgebungssensor derart in der Umgebung angeordnet sein, dass dieser die Maschine, den Fahrweg der Maschine und insbesondere Objekte in dem Überwachungsbereich der Maschine erfasst.

Die Maschine ist mobil, d.h. kann sich von einem Ort zum anderen, insbesondere selbstständig, bewegen. Unter "mobil" ist nicht zu verstehen, dass die Maschine an einem festen Ort positioniert ist und sich nur einzelne Teile der Maschine bewegen können. Beispielsweise kann die Maschine ein Fahrzeug oder Roboter sein. Ferner können die Abmessungen der Maschine der Steuereinheit bekannt sein. Durch die Verwendung der Kennzeichnungen an vorgegebenen Positionen können somit beispielsweise Rückschlüsse über eine Position und/oder Ausrichtung und/oder einen durch die Maschine vereinnahmten Raum geschlossen werden, wenn die Kennzeichnung von dem Umgebungssensor erfasst wird.

Die Steuereinheit kann zumindest mittelbar und vorzugsweise drahtlos über ein beliebiges an sich bekanntes Kommunikationsprotokoll mit dem Umgebungssensor, der Maschine und/oder dem Kennzeichnungssensor verbunden sein, also direkt oder über ein weiteres Gerät, wie eine übergeordnete Steuerung oder eine Cloud. Die Steuereinheit kann als zentrale Steuerung ausgebildet sein, die weder Teil des Umgebungssensors oder Kennzeichnungssensors noch Teil der Prüfmaschine ist. In diesem Fall kann die Steuereinheit beispielsweise mit einer Maschinensteuerung der Maschine bzw. bei einer Vielzahl von Maschinen mit jeweiligen Maschinensteuerungen kommunizieren, um entsprechende Steuerbefehle zu erteilen. Alternativ kann die Steuereinheit auch als Teil einer Steuerung der Maschine, des Umgebungssensors oder des Kennzeichnungssensors ausgebildet sein und z.B. als Software ("App") in der Steuerung der Maschine integriert sein. Die Steuereinheit ist insbesondere ausgebildet, die Maschine basierend auf den Umgebungssensordaten, den Kennzeichnungsinformationen und/oder basierend auf einer vorgegebenen Route zu navigieren. Ferner ist die Steuereinheit ausgebildet, basierend auf der Kennzeichnungsinformation den Überwachungsbereich adaptiv einzustellen. Adaptiv bedeutet insbesondere, dass sich der Überwachungsbereich in Abhängigkeit von der erfassten Kennzeichnungsinformation verändern kann. Die Steuereinheit ist insbesondere ausgebildet, die von dem Umgebungssensor, dem Kennzeichnungssensor und/oder der Maschine empfangenen Daten in Echtzeit zu verarbeiten.

Die Erfindung hat den Vorteil, dass die Planungs- und Engineeringphase vereinfacht wird, da die aufwändige Dimensionierung von Überwachungsbereichen für unterschiedliche Szenarien minimiert wird. Ferner wird aufgrund der adaptiven Anpassung des Überwachungsbereichs die Gefahr für Fehlschaltungen, d.h. für eine nicht notwendige Initiierung einer Sicherheitsfunktion aufgrund einer Objekteerkennung in dem Überwachungsbereich, reduziert, sodass eine höhere Verfügbarkeit der Maschine gewährleistet wird. Erfindungsgemäß wird außerdem die Sicherheit des Systems erhöht, da durch die adaptive Anpassung des Überwachungsbereichs alle relevanten Bereiche überwacht werden. Insbesondere bei der Nutzung einer Vielzahl von Maschinen, d.h. einer Maschinenflotte, kann aufgrund der vorstehenden Vorteile die Auslastung der Maschinenflotte und damit die Produktivität des Gesamtsystems erhöht werden.

Weitere Ausführungsformen der Erfindung sind der Beschreibung, den Unteransprüchen und den Zeichnungen zu entnehmen.

Gemäß einer ersten Ausführungsform ist die Maschine eine autonome Maschine, insbesondere ein Overhead Hoist Transport (OHT), ein Automated Guided Vehicle (AGV) oder ein Autonomous Mobile Robot (AMR). Autonom bedeutet hierbei beispielsweise, dass die Maschine in der Lage ist, Aufgaben selbstständig und ohne menschliches Eingreifen zu erledigen. Beispielsweise kann die Maschine autonom navigierend sein, d.h. die Maschine kann eine vorgegebene Strecke selbstständig abfahren. Die Maschine kann auf der Grundlage von Algorithmen, vordefinierten Prozessen und/oder durch die Nutzung von künstlicher Intelligenz Entscheidungen treffen, Prozesse ausführen und sich an veränderte Umstände anpassen, ohne dass ein menschliches Eingreifen erforderlich ist. Die jeweiligen Berechnungen und/oder Algorithmen können auf einer Steuerung der Maschine und/oder der Steuereinheit ausgeführt werden.

Insbesondere kann die autonome Maschine ein Roboter, insbesondere ein AGV oder AMR, sein. Ein AGV ist beispielsweise ein fahrerloses Transportsystem, welches sich entlang vordefinierter Routen bewegen kann und insbesondere in Lagerhäusern bzw. -hallen verwendet wird. Ein AMR hingegen ist beispielsweise ein autonomer mobiler Roboter, der sich selbstständig in einer dynamischen Umgebung navigieren kann. Der AMR kann unabhängig von vordefinierten Routen agieren. Beispielsweise kann die Handlung eines AMR basierend auf Sensoren, Kameras, Laserscannern und/oder Algorithmen erfolgen, indem die Umgebung des AMRs in Echtzeit erfasst wird und einer bestimmten Situation entsprechende Handlungen vorgenommen werden. Die Route des AMR kann beispielsweise basierend auf den erfassten Kennzeichnungen festgelegt werden. In einer Ausführungsform kann die Maschine auch ein Overhead Transporter (OHT) sein. Ein OHT ist beispielsweise ein Transportgerät, das an einer Schiene oder einem Leitsystem befestigt ist und dazu dient, Materialien oder Güter in einem Produktions- oder Logistikbereich zu bewegen. Bei dem System kann es sich somit insbesondere um ein Logistiksystem für die Verwendung in Lagerhäusern und/oder für den Materialtransport und/oder die Materialhandhabung in der Halbleiterfertigung handeln. Die Maschine kann dabei beispielsweise ausgebildet sein, Objekte bzw. Waren aufzunehmen, zu transportieren und/oder abzulegen.

Vorteilhafterweise verfügen die vorstehenden Transportfahrzeuge häufig bereits über entsprechende Sensorik, z.B. Kamerasensoren oder andere Sensorik, zur Erfassung von Kennzeichnungen bzw. Kennzeichnungsinformationen, sodass die Erfindung ohne großen Aufwand in bestehende Systeme implementierbar ist.

Gemäß einer Ausführungsform umfasst die Kennzeichnungsinformation Informationen in Bezug auf den Fahrweg der Maschine. Die Kennzeichnungsinformation kann beispielsweise den künftigen während des Abfahrens des Fahrwegs von der Maschine vereinnahmten Bereich bzw. Raum angeben. Die Kennzeichnungsinformation kann einen 2D-Bereich oder 3D-Bereich angeben, welcher beim Abfahren des Fahrwegs zu einem, insbesondere bestimmten, zukünftigen Zeitpunkt von der Maschine vereinnahmt wird. Hierdurch ist die Steuereinheit in der Lage eine drohende Kollision mit einem Objekt festzustellen, welches beispielsweise entlang des Fahrwegs der Maschine angeordnet ist.

Gemäß einer Ausführungsform umfasst die einer Kennzeichnung zugehörige Kennzeichnungsinformation Informationen über einen Typ der Kennzeichnung und/oder Positionsinformationen, Winkelinformationen und/oder geometrische Informationen hinsichtlich eines der Kennzeichnung zugehörigen Überwachungssegments. Ein Überwachungssegment umfasst beispielsweise einen Teilbereich des gesamten Überwachungsbereichs, d.h. mehrere Überwachungssegmente ergeben den (Gesamt-)Überwachungsbereich. Der Kennzeichnungstyp kann beispielsweise angeben, dass es sich bei dem der Kennzeichnung zugehörigen Überwachungssegment um zumindest einen Teil einer Kurve, insbesondere Linkskurve oder Rechtskurve, einer Verzweigung oder eines geradlinigen Abschnitts handelt. Die Kennzeichnungsinformation kann aber auch Hinweise enthalten, welche anzeigen, dass ein bestimmter Streckenabschnitt, z.B. ein Kurvenabschnitt, bevorsteht oder endet. Die Positionsinformationen können ferner Informationen, z.B. Koordinaten, umfassen, die den Bereich des Überwachungssegments auf einer Karte eindeutig festlegen. Die Positionsinformationen können ferner den Abstand einer Kennzeichnung zu einer vorherigen und/oder nachfolgenden Kennzeichnung angeben. Mit den Winkelinformationen kann ferner ein Winkel des Überwachungssegments, insbesondere der Mittelachse des Überwachungsbereichs, mit Bezug auf die Bewegungsachse der Maschine und/oder ein Kurvenwinkel angegeben werden. Die geometrischen Informationen können darüber hinaus Informationen hinsichtlich der Form, Größe, z.B. Länge und/oder Breite, Struktur und/oder Orientierung des Überwachungssegments und/oder Informationen wie z.B. den Radius einer zu durchfahrenden Kurve umfassen.

Gemäß einer Ausführungsform ist der Kennzeichnungssensor ausgebildet, bei einer Erfassung der Kennzeichnung die Kennzeichnungsinformation, insbesondere direkt, von der Kennzeichnung zu empfangen oder basierend auf der Erfassung der Kennzeichnung eine Zuordnungsinformation zu erzeugen, auf welcher basierend die der Kennzeichnung zugehörige Kennzeichnungsinformation von einem Speicher abgerufen wird. Im ersten Fall kann die Kennzeichnung ausgebildet sein, die Kennzeichnungsinformation, z.B. als Datenpaket, direkt an den Kennzeichnungssensor zu übertragen. Beispielsweise kann ein RFID-Tag als Kennzeichnung verwendet werden, welcher beim Auslesen durch einen RFID-Leser als Kennzeichnungssensor ein entsprechendes Datenpaket mit der Kennzeichnungsinformation an den RFID-Leser sendet. Im zweiten Fall wird die Kennzeichnungsinformation insbesondere unter Verwendung der Zuordnungsinformation erzeugt bzw. abgerufen. Beispielsweise kann der Kennzeichnungssensor basierend auf der Erfassung bzw. dem Auslesen der Kennzeichnung, z.B. eines Barcodes oder QR-Codes, einen Zuordnungswert oder eine Zuordnungszeichenkette erzeugen, die dazu verwendet wird, um die Kennzeichnungsinformation von einem Speicher, z.B. von einem externen Speicher oder einem Server, abzurufen.

Insbesondere ist es auch möglich, den zukünftigen Fahrweg der Maschine von einem (übergeordneten) Routenplaner und/oder einem (übergeordneten) Lokalisierungssystem an die Maschine zu übertragen. In diesem Fall kann eine Erfassung der Kennzeichnung für die Ermittlung des zukünftigen Fahrwegs nicht notwendig sein.

Gemäß einer Ausführungsform umfasst die Kennzeichnung einen RFID-Tag, eine optische Kennzeichnung, eine induktive Kennzeichnung und/oder eine magnetische Kennzeichnung. Die optische Kennzeichnung kann beispielsweise einen Barcode, einen QR-Code oder einen LIDAR-Reflektor umfassen. Der Kennzeichnungssensor kann in Abhängigkeit von der jeweils verwendeten Kennzeichnung einen RFID-Leser, eine Kamera, einen LIDAR-Sensor, einen induktiver Sensor und/oder einen Magnetsensor umfassen.

Gemäß einer Ausführungsform ist die Steuereinheit ausgebildet, den Überwachungsbereich der Maschine in vorgegebenen Zeitschritten, insbesondere zyklisch, zu aktualisieren. Da der Überwachungsbereich insbesondere durch erfasste Kennzeichnungen festgelegt wird, wird durch die Aktualisierung des Überwachungsbereichs sichergestellt, dass neue, d.h. während der Fahrt der Maschine in den Erfassungsbereich des Kennzeichnungssensor eintretende, Kennzeichnungen, welche zu einem vorherigen Zeitpunkt noch nicht im Erfassungsbereich lagen, berücksichtigt werden. Die vorgegebenen Zeitschritte sind insbesondere kleiner als die Zeit, welche die Maschine benötigt, um die Strecke zwischen zwei aufeinanderfolgenden Kennzeichnungen zurückzulegen, d.h. $Δ t < \frac{{v}_{Maschine}}{Δ d}$, wobei Δ*t* der vorgegebene Zeitschritt ist, *v_{Maschine}* die Geschwindigkeit der Maschine ist und Δ*d* der Abstand zwischen zwei aufeinanderfolgenden Kennzeichnungen ist. Die Dauer der vorgegebenen Zeitschritte kann abhängig von der Geschwindigkeit der Maschine vorgegeben sein. Die Geschwindigkeit der Maschine kann z.B. mit Encodern direkt erfasst werden.

Die Aktualisierungsrate kann ferner adaptiv eingestellt werden. Beispielsweise kann die Aktualisierungsrate in Abhängigkeit eines Fahrmanövers der Maschine und/oder der Position der Maschine eingestellt werden. In einer Kurve kann die Aktualisierungsrate zum Beispiel erhöht sein, während in einem geradlinigen Streckenabschnitt die Aktualisierungsrate reduziert sein kann. Ferner können Bereiche festgelegt werden, in denen eine erhöhte Vorsicht geboten sein kann, sodass die Aktualisierungsrate in diesen Bereichen erhöht ist.

Gemäß einer Ausführungsform ist die Steuereinheit ausgebildet, den Fahrweg der Maschine basierend auf der Kennzeichnungsinformation festzulegen. Die Kennzeichnungen können beispielsweise eine Route festlegen oder vorgeben, entlang der sich die Maschine dann bewegt. Hierfür können eine Vielzahl von Kennzeichnungen entlang eines vorgegebenen Pfads, insbesondere in vorgegebenen, gleichmäßigen Abständen, angeordnet sein. Die Kennzeichnung kann auch eine linienförmige Markierung umfassen, welche beispielsweise eine Spurmarkierung darstellt und den Fahrweg der Maschine anzeigt. Der Überwachungsbereich kann in diesem Fall basierend auf der Linie bzw. dem Verlauf der Linie ermittelt und eingestellt werden. Beispielsweise kann die Kennzeichnung als Mittellinie einer Fahrbahn angesehen werden, wobei zwei Führungslinien des Überwachungsbereichs, welche beispielsweise die Breite des Überwachungsbereichs definieren, den gleichen Abstand zu der Kennzeichnung aufweisen und insbesondere parallel zu der Kennzeichnung verlaufen.

Gemäß einer Ausführungsform ist die Steuereinheit ausgebildet, den Überwachungsbereich zusätzlich basierend auf spezifischen Parametern der Maschine einzustellen. Die maschinenspezifischen Parameter können beispielsweise eine Geschwindigkeit, ein Bremsverhalten, z.B. die Länge des Bremswegs, eine räumliche Dimensionierung der Maschine, z.B. eine Länge, Breite und/oder Höhe der Maschine, und dergleichen umfassen. Der Überwachungsbereich kann insbesondere derart dimensioniert sein, dass die Maschine im Falle einer rechtzeitigen Detektion eines Objekts in dem Überwachungsbereich in der Lage ist, ohne eine Kollision mit dem detektierten Objekt zum Stillstand zu kommen.

Gemäß einer Ausführungsform ist die Steuereinheit ausgebildet, den Überwachungsbereich basierend auf Kennzeichnungsinformationen einer Mehrzahl von Kennzeichnungen festzulegen. Beispielsweise kann jede Kennzeichnung ein jeweiliges Überwachungssegment angeben, wobei die Überwachungssegmente überlagert werden, um den (Gesamt-)Überwachungsbereich anzugeben. Insbesondere in sicherheitskritischen Bereichen wie beispielsweise in Kurven kann die Dichte an Kennzeichnungen höher sein, wohingegen in geradlinigen Streckenabschnitten die Dichte an Kennzeichnungen niedriger sein kann. Beispielsweise ist der Abstand zwischen zwei aufeinanderfolgenden Kennzeichnungen in sicherheitskritischen Bereichen kleiner als 1m, kleiner als 50cm, kleiner als 20cm oder kleiner als 10cm, während er in allen anderen Bereichen beispielsweise größer als 1m, größer als 2m oder größer als 3m ist. Ferner können unterschiedliche Arten von Kennzeichnungen für unterschiedliche Streckenabschnitte verwendet werden. Beispielsweise kann in einer Kurve eine andere Art von Kennzeichnungen verwendet werden als in einem geradlinigen Streckenabschnitt. Hierdurch kann das System noch schneller ermitteln, in welchem Streckenabschnitt sich die Maschine befindet.

Gemäß einer Ausführungsform umfasst die Maschine einen Sensor zur Erfassung der Pose der Maschine, wobei die Steuereinheit ausgebildet ist, basierend auf der Pose der Maschine und basierend auf der Kennzeichnungsinformation den Überwachungsbereich einzustellen. Die Steuereinheit kann beispielsweise die zukünftige Position und/oder Ausrichtung der Maschine basierend auf der aktuellen Pose der Maschine und basierend auf der Kennzeichnungsinformation berechnen bzw. schätzen. In einer anderen Ausführungsform kann die Steuereinheit ohne einen Sensor zur Erfassung der Pose der Maschine auskommen, indem die Steuereinheit die relative Pose der Maschine in Bezug auf eine jeweilige Kennzeichnung ermittelt und basierend auf der relativen Pose sowie der Kennzeichnungsinformation, welche beispielsweise die Position der Kennzeichnung umfasst, die absolute Pose der Maschine ermittelt.

Gemäß einer Ausführungsform ist die Steuereinheit ausgebildet, basierend auf den Umgebungssensordaten und dem eingestellten Überwachungsbereich einen Eingriff eines Objekts in den Überwachungsbereich zu erfassen und in Reaktion auf die Erfassung des Eingriffs des Objekts in den Überwachungsbereich eine Sicherheitsreaktion auszulösen. Die Sicherheitsreaktion kann beispielsweise das Stoppen der Maschine, das Initiieren eines Ausweichmanövers der Maschine, die Ausgabe eines akustischen und/oder optischen Warnsignal und/oder dergleichen umfassen. Wie bereits in einem der vorherigen Abschnitte erläutert, kann das Vorhandensein eines Objekts in dem Überwachungsbereich, insbesondere kontinuierlich oder in vorgegebene Zeitschritten, geprüft werden. Die adaptive Einstellung des Überwachungsbereichs kann dabei verhindern, dass aufgrund eines unpräzisen Überwachungsbereichs ein Objekt in dem Überwachungsbereich erfasst wird, bei dem eine Kollision mit der Maschine ausgeschlossen ist. Für die Identifizierung einer potenziellen Kollision kann die Steuereinheit neben von dem Umgebungssensor und von der Maschine übermittelte Daten auch auf bereits bekannte Daten zurückgreifen, beispielsweise Raumdaten wie insbesondere Informationen hinsichtlich der Größe des Raums sowie der Position und/oder Ausrichtung von Objekten, insbesondere stationären Objekten.

Gemäß einer Ausführungsform ist die Steuereinheit ausgebildet, den ermittelten Überwachungsbereich in einem Speicher zu hinterlegen, wobei zumindest eine weitere Maschine ausgebildet ist, basierend auf dem gespeicherten Überwachungsbereich den zugehörigen Überwachungsbereich der weiteren Maschine einzustellen. Mit anderen Worten kann der von einer Maschine über eine entsprechende Route eingestellte bzw. ermittelte Überwachungsbereich in dem Speicher, z.B. in einer gespeicherten Karte der Umgebung, hinterlegt werden, sodass andere Maschinen den gespeicherten Überwachungsbereich abrufen können. Der Überwachungsbereich der Maschine wird beispielsweise während der Fahrt der Maschine fortlaufend in dem Speicher aktualisiert und/oder hinterlegt, sodass am Ende einer entsprechenden Fahrt der gesamte überwachte Bereich gespeichert wurde. Sobald eine andere Maschine die gleiche Strecke zumindest teilweise abfährt, kann der gespeicherte Überwachungsbereich als Überwachungsbereich der weiteren Maschine verwendet werden. In diesem Fall ist nur eine Lokalisierung, d.h. eine Bestimmung der Position und/oder Ausrichtung, der weiteren Maschine notwendig, um den Überwachungsbereich festzulegen. Die Kennzeichnungsinformationen können weiterhin, z.B. zur Überprüfung des gespeicherten Überwachungsbereichs, genutzt werden.

Ein weiterer Aspekt der Erfindung betrifft ein Verfahren zur Überwachung eines Überwachungsbereichs einer mobilen Maschine, welches umfasst, dass:
von zumindest einem Kennzeichnungssensor eine Kennzeichnungsinformation von zumindest einer entlang einem Fahrweg der Maschine angeordneten Kennzeichnung erfasst wird, und
basierend auf der Kennzeichnungsinformation der Überwachungsbereich der Maschine adaptiv (und insbesondere automatisch) eingestellt wird.

Für das Verfahren gelten die Ausführungen zu dem erfindungsgemäßen System entsprechend, dies gilt insbesondere hinsichtlich Vorteilen und Ausführungsformen.

Es ist zu beachten, dass jede Kombination der vorstehenden Ausführungsformen möglich ist, solange dies nicht explizit ausgeschlossen wurde.

Nachfolgend wird die Erfindung rein beispielhaft unter Bezugnahme auf die Zeichnungen dargestellt. Es zeigen:
- Fig. 1: ein System zur Überwachung eines Überwachungsbereichs einer Maschine
- Fig. 2: eine Veranschaulichung eines Überwachungsbereichs einer Maschine gemäß dem Stand der Technik (a) und gemäß der Erfindung (b)
- Fig. 3: eine Veranschaulichung eines Fahrszenarios eines AMRs
- Fig. 4: eine Darstellung des von einem AMRs während des Abfahrens einer Route erfassten Überwachungsbereichs

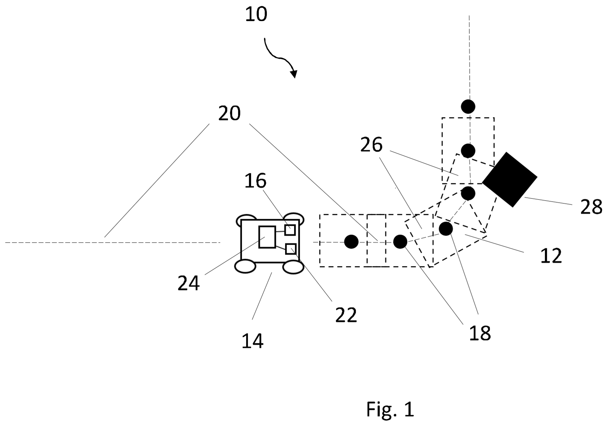

Fig. 1 zeigt ein System 10 zur Überwachung eines Überwachungsbereichs 12 einer mobilen Maschine. Das System 10 umfasst eine mobile Maschine in Form eines AMRs 14 mit einem Kennzeichnungssensor zur Erfassung einer Kennzeichnungsinformation in Form eines RFID-Lesers 16. Ferner umfasst das System 10 maschinenlesbare Kennzeichnungen, welche entlang einem Fahrweg 20 des AMR 14 angeordnet sind. Vorliegend handelt es sich bei den Kennzeichnungen um RFID-Tags 18, welche von dem RFID-Leser 16 ausgelesen werden können. Das System 10 umfasst außerdem einen Umgebungssensor in Form einer Kamera 22 zur Erfassung der Umgebung der Maschine sowie eine Steuereinheit 24, welche mittels einer Datenverbindung mit der Kamera 22 und dem RFID-Leser 16 verbunden ist und welche ausgebildet ist, den AMR 14 zu navigieren und basierend auf der Kennzeichnungsinformation den Überwachungsbereich 12, insbesondere an den Fahrweg 20, adaptiv einzustellen.

Wie in Fig. 1 dargestellt, beinhaltet der Überwachungsbereich 12 eine Vielzahl von Überwachungssegmente 26, welche einer jeweiligen Kennzeichnung, d.h. einem jeweiligen RFID-Tag 16, zugehörig sind. Der RFID-Leser 18 liest hierzu die einem RFID-Tag 18 zugehörige Kennzeichnungsinformation aus und übermittelt diese an die Steuereinheit 24, welche basierend auf der Kennzeichnungsinformation das jeweilige Überwachungssegment 26 ermittelt bzw. einstellt. Die Überlagerung der einzelnen Überwachungssegmente 26 ergibt anschließend den Überwachungsbereich 12.

Wird festgestellt, dass sich ein Objekt 28 in dem Überwachungsbereich 12 befindet, so reagiert die Steuereinheit, indem sie eine Sicherheitsreaktion auslöst, welche den AMR 14 beispielsweise dazu veranlasst, zu stoppen oder auszuweichen.

Die von dem AMR 14 erfassten Kennzeichnungen können neben der Bestimmung der Überwachungsbereichs 12 zusätzlich als Spurmarkierung dienen und dem AMR 14 den Fahrweg 20 vorgeben.

Je nach verwendeter Art von Kennzeichnungen kann der Kennzeichnungssensor und der Umgebungssensor auch als ein einziger Sensor ausgebildet sein. Werden beispielsweise QR-Codes als Kennzeichnungen verwendet, so kann eine einzige Kamera 22 verwendet werden, um die Funktion des Kennzeichnungssensors und des Umgebungssensors umzusetzen.

In Fig. 1 ist die Steuereinheit 24 als Teil des AMR 14 dargestellt. Grundsätzlich kann die Steuereinheit 24 aber auch als zentrale Steuerung ausgebildet sein, welche, insbesondere drahtlos, mit dem AMR 14 und/oder weiteren AMRs in Verbindung steht. In einer anderen Ausführungsform ist die Steuereinheit 24 als Teil des AMR 14 ausgebildet und steht mit einer zentralen Steuerung in Verbindung, welche ausgebildet ist, eine Vielzahl von AMRs 14 zu koordinieren und zu steuern.

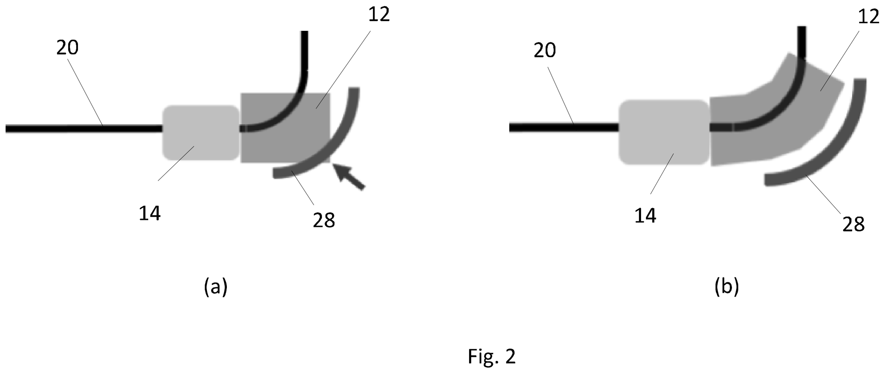

Fig. 2a veranschaulicht einen Überwachungsbereich 12 einer Maschine gemäß dem Stand der Technik, während in Fig. 2b der Überwachungsbereich 12 einer Maschine 12 gemäß der Erfindung dargestellt ist.

Wie in Fig. 2a dargestellt, ist der Überwachungsbereich 12 des AMRs 14 als ein vordefinierter Bereich mit festem Bezug zur Pose, d.h. zur Position und/oder Ausrichtung, des AMRs 14 eingestellt. Im vorliegenden Fall ist der Überwachungsbereich 12 des AMRs 14 als ein vor dem AMR 14 liegender rechteckiger Bereich eingestellt, welcher unabhängig von der Fahrsituation bzw. dem Fahrmanöver des AMRs 14 eingestellt wird. Aufgrund dieser starren Festlegung des Überwachungsbereichs 12 wird beim Durchfahren einer Kurve ein Objekt 28 in dem Überwachungsbereich 12 detektiert und somit eine Kollisionsgefahr festgestellt, obwohl keine Kollisionsgefahr besteht. Trotz nicht bestehender Kollisionsgefahr wird in diesem Fall eine Sicherheitsreaktion ausgelöst, welche beispielsweise den AMR 14 dazu veranlasst, zu stoppen. Es kommt somit zu vermeidbaren Stillstandzeiten, welche die Produktivität des Systems 10 verringern.

In Fig. 2b hingegen wird der Überwachungsbereich 12 erfindungsgemäß adaptiv basierend auf den erfassten Kennzeichnungsinformationen, insbesondere angepasst an den Fahrweg des AMRs 14, eingestellt. Wie in Fig. 2b erkennbar, fällt das Objekt 28 aufgrund der adaptiven Einstellung des Überwachungsbereichs 12 nicht in den Überwachungsbereich 12 hinein, sodass keine fehlerhafte Sicherheitsreaktion ausgelöst wird. Unnötige Stillstandzeiten werden damit vermieden und die Produktivität des Systems 10 erhöht.

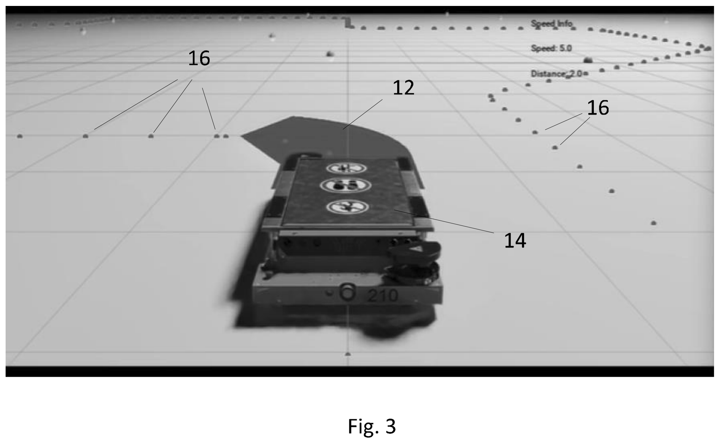

Fig. 3 veranschaulicht ein der Fig. 1 und Fig. 2 entsprechendes Fahrszenario eines AMRs 14 aus einer alternativen Perspektive.

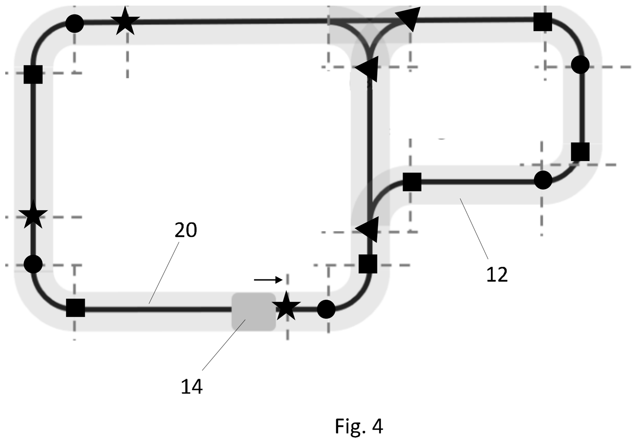

Fig. 4 zeigt eine Darstellung des von einem AMRs 14 während des Abfahrens eines Fahrwegs 20 erfassten Überwachungsbereichs 12. Der erfasste Überwachungsbereich kann in einem Speicher einer zentralen Steuerung gespeichert werden, damit auch andere AMRs 14 auf die zugehörigen Daten zugreifen können.

In Fig. 4 sind die Kennzeichnungen darüber hinaus in Abhängigkeit der Kennzeichnungsinformation mit unterschiedlichen Symbolen dargestellt. Aus einer als Stern dargestellten Kennzeichnung kann der Kennzeichnungssensor beispielsweise eine Kennzeichnungsinformation erfassen, welche angibt, dass eine Kurve bevorsteht. Eine als Kreis dargestellte Kennzeichnung kann hingegen angeben, dass eine 90°-Linkskurve beginnt, während eine als Rechteck dargestellte Kennzeichnung angibt, dass die Linkskurve endet und in einen geradlinigen Streckenabschnitt übergeht. Eine als Dreieck dargestellte Kennzeichnung gibt ferner an, dass ein Verzweigungsabschnitt bevorsteht und/oder welche Abzweigungsmöglichkeiten (Rechtskurve, Linkskurve, geradeaus) bestehen. Neben den vorstehend beschriebenen Informationen kann eine jeweilige Kennzeichnungsinformation selbstverständlich noch weitere Informationen oder eine Kombination der vorstehend beschriebenen Informationen umfassen. Auf eine Darstellung sämtlicher Kennzeichnungen entlang des Fahrwegs 20 wurde aus Übersichtlichkeitsgründen verzichtet.

### Bezugszeichenliste

- 10: System
- 12: Überwachungsbereich
- 14: AMR
- 16: RFID-Leser
- 18: RFID-Tags
- 20: Fahrweg
- 22: Kamera
- 24: Steuereinheit
- 26: Überwachungssegment
- 28: Objekt

## Patentansprüche

1. System (10) zur Überwachung eines Überwachungsbereichs (12) einer mobilen Maschine, umfassend:
zumindest eine mobile Maschine mit zumindest einem Kennzeichnungssensor zur Erfassung einer Kennzeichnungsinformation;
zumindest eine maschinenlesbare Kennzeichnung, welche entlang einem Fahrweg (20) der Maschine angeordnet ist;
zumindest einen Umgebungssensor zur Erfassung der Umgebung der Maschine; und
eine Steuereinheit (24), welche mittels einer Datenverbindung mit dem Umgebungssensor und der Maschine verbunden ist und welche ausgebildet ist, die Maschine zu navigieren und
basierend auf der Kennzeichnungsinformation den Überwachungsbereich (12) adaptiv einzustellen.

2. System (10) nach Anspruch 1,
wobei die Maschine eine autonome Maschine, insbesondere ein Overhead Hoist Transport (OHT), ein Automated Guided Vehicle (AGV) oder ein Autonomous Mobile Robot (AMR), ist.

3. System (10) nach Anspruch 1 oder 2,
wobei die Kennzeichnungsinformation Informationen in Bezug auf den Fahrweg (20) der Maschine umfasst.

4. System (10) nach einem der vorstehenden Ansprüche,
wobei die einer Kennzeichnung zugehörige Kennzeichnungsinformation Informationen über einen Typ der Kennzeichnung und/oder Positionsinformationen, Winkelinformationen und/oder geometrische Informationen hinsichtlich eines der Kennzeichnung zugehörigen Überwachungssegments (26) umfasst.

5. System (10) nach einem der vorstehenden Ansprüche,
wobei der Kennzeichnungssensor ausgebildet ist, bei einer Erfassung der Kennzeichnung die Kennzeichnungsinformation, insbesondere direkt, von der Kennzeichnung zu empfangen oder basierend auf der Erfassung der Kennzeichnung eine Zuordnungsinformation zu erzeugen, auf welcher basierend die der Kennzeichnung zugehörige Kennzeichnungsinformation von einem externen Speicher abgerufen wird.

6. System (10) nach einem der vorstehenden Ansprüche,
wobei die Kennzeichnungen RFID-Tags, optische Kennzeichnungen, induktive Kennzeichnungen und/oder magnetische Kennzeichnungen umfassen.

7. System (10) nach einem der vorstehenden Ansprüche,
wobei die Steuereinheit (24) ausgebildet ist, den Überwachungsbereich (12) der Maschine in vorgegebenen Zeitschritten, insbesondere zyklisch, zu aktualisieren.

8. System (10) nach einem der vorstehenden Ansprüche,
wobei die Steuereinheit (24) ausgebildet ist, den Fahrweg (20) der Maschine basierend auf der Kennzeichnungsinformation festzulegen.

9. System (10) nach einem der vorstehenden Ansprüche,
wobei die Steuereinheit (24) ausgebildet ist, den Überwachungsbereich (12) zusätzlich basierend auf spezifischen Parametern der Maschine einzustellen.

10. System (10) nach einem der vorstehenden Ansprüche,
wobei die Steuereinheit (24) ausgebildet ist, den Überwachungsbereich (12) basierend auf Kennzeichnungsinformationen einer Mehrzahl von Kennzeichnungen einzustellen.

11. System (10) nach einem der vorstehenden Ansprüche,
wobei die Maschine einen Sensor zur Erfassung der Pose der Maschine umfasst, wobei die Steuereinheit (24) ausgebildet ist, basierend auf der Pose der Maschine und basierend auf der Kennzeichnungsinformation den Überwachungsbereich (12) einzustellen.

12. System (10) nach einem der vorstehenden Ansprüche,
wobei die Steuereinheit (24) ausgebildet ist, basierend auf den Umgebungssensordaten und dem eingestellten Überwachungsbereich (12) einen Eingriff eines Objekts (28) in den Überwachungsbereich (12) zu erfassen und in Reaktion auf die Erfassung des Eingriffs des Objekts (28) in den Überwachungsbereich (12) eine Sicherheitsreaktion auszulösen.

13. System (10) nach einem der vorstehenden Ansprüche,
wobei die Steuereinheit (24) ausgebildet ist, den ermittelten Überwachungsbereich (12) in einem Speicher zu hinterlegen, wobei zumindest eine weitere Maschine ausgebildet ist, basierend auf dem gespeicherten Überwachungsbereich (12) den zugehörigen Überwachungsbereich (12) der weiteren Maschine einzustellen.

14. Verfahren zur Überwachung eines Überwachungsbereichs (12) einer mobilen Maschine, welches umfasst, dass:
von zumindest einem Kennzeichnungssensor eine Kennzeichnungsinformation von zumindest einer entlang einem Fahrweg (20) der Maschine angeordneten Kennzeichnung erfasst wird, und
basierend auf der Kennzeichnungsinformation der Überwachungsbereich der Maschine adaptiv eingestellt wird.
